# EUROPEAN PATENT APPLICATION

(11) **EP 1 230 989 A2**
(43) Date of publication of application: **14.08.2002**
(21) Application number: 02251000.2
(22) Date of filing: 13.02.2002
(51) Int. Cl.: B08B 7/00, C03C 23/00, G02B 1/10

(54) **Optical element for use in exposure apparatus and method for rinsing said optical element**

(30) Priority: 13.02.2001 JP 2001035113
(71) Applicant: CANON KABUSHIKI KAISHA, Tokyo (JP)
(72) Inventor: Biro, Ryuji, Ohta-ku, Tokyo (JP); Otani, Minoru, Ohta-ku, Tokyo (JP); Ando, Kenji, Ohta-ku, Tokyo (JP); Suzuki, Yasuyuki, Ohta-ku, Tokyo (JP); Kanazawa, Hidehiro, Ohta-ku, Tokyo (JP)
(74) Representative: Beresford, Keith Denis Lewis

(57) **Abstract**

Disclosed is an optical element (L) disposed in a container (700) having an inside ambience independent from an outside of the container, and rinsed by irradiation with ultraviolet rays from a light source (610) outside the container. Also disclosed is a rinsing method, having a first step for accommodating an article (L), to be rinsed, into a second container (700) disposed inside a first container (600) and being adapted to maintain an ambience different from that of the first container (600), a second step for introducing a rinsing gas into the second container (700), and a third step for irradiating the article (L) with ultraviolet rays from a light source (610) disposed inside the first container (600) but outside the second container (700).

## Description

### FIELD OF THE INVENTION AND RELATED ART

This invention relates generally to a rinsing method and apparatus for cleaning an optical element such as a lens or a mirror, for example. In another aspect, the invention concerns an exposure apparatus having an optical element cleaned by such rinsing method and apparatus. However, it should be noted that use of optical elements cleaned by the rinsing method and apparatus of the present invention is not limited to that in exposure apparatuses. They can be used widely in various optical instruments such as photoengraving machines, projection inspection machines, projection machines or movie projectors, for example. Also, use of rinsing systems of the present invention is not limited to that for optical elements. They can be applied to rinsing dishes, semiconductors or glasses, for example, or even to removal of a resist coating.

Lithographic process is a process in which a mask pattern is transferred to a photosensitive material (resist) applied to a workpiece such as a monocrystal substrate or glass substrate, and it involves a resist coating step, an exposure step, a developing step, an etching step, and a resist removing step. In the exposure step among them, there are three important parameters, that is, resolution, overlay precision, and throughput. The resolution concerns the minimum size that can be accurately transferred to a workpiece, and the overlay precision is the precision related to superposition of plural patterns on a workpiece. The throughput is the number of workpieces to be processed per unit time.

In order to accomplish higher resolution, recently, use of excimer lasers as a light source, which can project light of a wavelength shorter than Hg lamps, has been proposed. However, if the wavelength of light is very short, it may cause absorption, scattering and interference of light. Therefore, with the shortening of light from a light source, the influence of contaminants such as organic matters adhered to an optical element, such as a lens or a mirror, becomes large and it can not be disregarded. Contaminants may cause absorption, scattering and/or interference of exposure light, or deterioration of optical characteristic of the optical element (such as transmission, reflection or spectral characteristics). Also, it may cause a decrease of durability of the optical element to laser light. This may result in decreased resolution or decreased throughput, breakage of the optical element, or deterioration of its performance. In consideration of it, conventionally, optical elements are rinsed beforehand and, after that, they are mounted into an exposure apparatus.

As regards the rinsing method for cleaning optical elements, conventionally, use of plasma or low-wavelength light, use of neutral detergent, and use of organic or inorganic solvent have been proposed. Recently, from the standpoint of a higher rinsing ability and for prevention of breakage of optical elements, an optical rinsing method which uses ultraviolet-ray ozone and which is based on photo-chemical reaction becomes attractive.

In accordance with the optical rinsing method, organic matters adhered to the surface of an optical element are decomposed by irradiating the optical element with ultraviolet light. Typically, in the optical rinsing method, an optical element to be cleaned is accommodated inside an ambience which contains oxygen, and then the optical element is irradiated with ultraviolet rays projected from an ultraviolet lamp, whereby it is rinsed. The ultraviolet light produces activated oxygen in an oxygen gas, and organic substances adhered to the surface of the optical element are activated. Ozone is produced from activated oxygen and oxygen molecules. In response to irradiation with ultraviolet light, ozone changes into activated oxygen in exited state, such that organic matters are decomposed and volatilized.

However, if an optical element having been rinsed as above is left in an air, non-bonds on the surface of the optical element just after being activated by rinsing with the irradiation of ultraviolet light function to attract contaminants, such that the optical element is contaminated again. The optical element re-contaminated so may cause inconveniences similar to those before rinsing the optical element.

Japanese Laid-Open Patent Application, Laid-Open No. 221536/1999 proposes a rinsing method which is arranged to reduce re-contamination of an optical element after being rinsed. This method includes a post-process step in which, at the end of an optical rinsing procedure, the optical element is left for a predetermined time in a nitrogen ambience. With this post-process step, non-bonds on the surface of the optical element are reduced by attracting nitrogen and the surface of the optical element is deactivated. Thus, the probability of contaminant attraction is decreased thereby.

In accordance with this Japanese document, the optical element is placed in the same ambience as organic substances such as, for example, a seal member for isolating the ambience of the rinsing apparatus from the outside atmosphere, or a rubber member for holding the ultraviolet lamp. This may cause inconveniences that the organic substances are decomposed by the ultraviolet light and contaminants degasified into the ambience are newly produced, which leads to re-contamination of the optical element.

### SUMMARY OF THE INVENTION

It is an object of the present invention to provide an optical element to be produced while preventing contamination such as described above.

It is another object of the present invention to provide an exposure apparatus having such an optical element incorporated thereinto.

It is a further object of the present invention to provide a rinsing apparatus and/or a rinsing method effective to prevent contamination of an optical element such as described above.

In accordance with an aspect of the present invention, to achieve at least one of the above-described objects, there is provided an optical element characterized by being disposed in a container having an inside ambience independent from an outside of the container, and by rinsing by irradiation with ultraviolet rays from a light source outside the container.

Since the optical element can be rinsed inside the container having an ambience different from that outside the container, contamination of it can be reduced significantly.

In one preferred form of this aspect of the present invention, the container may have no seal member containing an organic substance.

The irradiation of the ultraviolet rays may be carried out while the container is filled with a gas containing oxygen. The irradiation of the ultraviolet rays may be carried out while a casing accommodating the light source, and the container may be filled with an inactive gas such as nitrogen. The optical element may be made of at least one of fluorite and quartz being usable in a wavelength region of 200 nm or less. The ultraviolet rays may contain light of a wavelength of 300 nm or less. The ultraviolet light may be emitted from a low-pressure Hg lamp.

In accordance with another aspect of the present invention, there is provided an optical system characterized by including at least one optical element as recited above. Thus, it is less contaminated and it has a high quality.

In accordance with a further aspect of the present invention, there is provided an exposure apparatus characterized by including an optical system as recited above.

In accordance with a yet further aspect of the present invention, there is provided a rinsing system, characterized by: a first container; a light emitting unit disposed inside said first container, for emitting ultraviolet rays; and a second container disposed inside said first container and arranged so that said light emitting unit is outside said second container, said second container being adapted to accommodate therein an article to be rinsed and also to enable irradiation of the article with ultraviolet rays from said light emitting unit, said second container further being adapted to maintain an ambience different from that of said first container. In this rinsing system, the first container accommodates a second container therein.

The second container has a narrow space in which no seal member or the like of the first container is placed. The second container is adapted to maintain an inside ambience different from that of the first container. With this arrangement, the possibility of contamination inside the second container due to contaminants produced from organic substances within the first container, can be avoided effectively.

In accordance with a still further aspect of the present invention, there is provided a container for a rinsing system, characterized by: a casing for accommodating therein an article to be rinsed, said casing being adapted to maintain an ambience different from an outside ambience; and a glass window mounted on said casing, for enabling irradiation of the article with ultraviolet rays from the outside. The container in this aspect corresponds to the second container of the rinsing system described above.

In the rinsing system or the container for a rinsing system according to the present invention, the article may be a light transmission type optical element. Also, the article may be made of one of quartz and fluorite, and the article may be an optical element adapted to be used in a wavelength region of 200 nm or shorter.

In accordance with a yet further aspect of the present invention, there is provided a rinsing method, characterized by: a first step for accommodating an article, to be rinsed, into a second container disposed inside a first container and being adapted to maintain an ambience different from that of the first container; a second step for introducing a rinsing gas into the second container; and a third step for irradiating the article with ultraviolet rays from a light source disposedinside the first container but outside the second container. The rinsing method described above has similar functions as of the rinsing system described hereinbefore. Also, this rinsing method may function as an optical element producing method which includes a process for rinsing a produced optical element, or a producing method for a product (such as an exposure apparatus, for example) in which an article (such as an optical element, for example) rinsed in accordance with the rinsing method, is incorporated.

In accordance with a yet further aspect of the present invention, there is provided an exposure apparatus having an optical element rinsed in accordance with a rinsing method as recited above. The optical element may be adapted to be used in a wavelength region of 200 nm or less.

In accordance with a still further aspect of the present invention, there is provided a device manufacturing method, characterized by: a first step for exposing a photosensitive member with a device pattern by use of an exposure apparatus as recited in above; and a second step for developing the exposed photosensitive member.

These and other objects, features and advantages of the present invention will become more apparent upon a consideration of the following description of the preferred embodiments of the present invention taken in conjunction with the accompanying drawings.

### BREIF DESCRIPTION OF THE DRAWINGS

Figure 1 is a schematic and sectional view of a rinsing system according to an embodiment of the present invention.

Figure 2 is a graph for explaining the light transmission factor of an optical element after being cleaned.

Figure 3 is a schematic view of a simplified optical path of an exposure apparatus having an illumination system.

Figure 4 is a flow chart for explaining a rinsing process which uses the rinsing system shown in Figure 1.

### DESCRIPTION OF THE PREFERRED EMBODIMENTS

Preferred embodiments of the present invention will now be described with reference to the attached drawings, and specifically in relation to a rinsing system 500. In these drawings, corresponding numerals are assigned to corresponding components, and duplicate description therefor will be omitted.

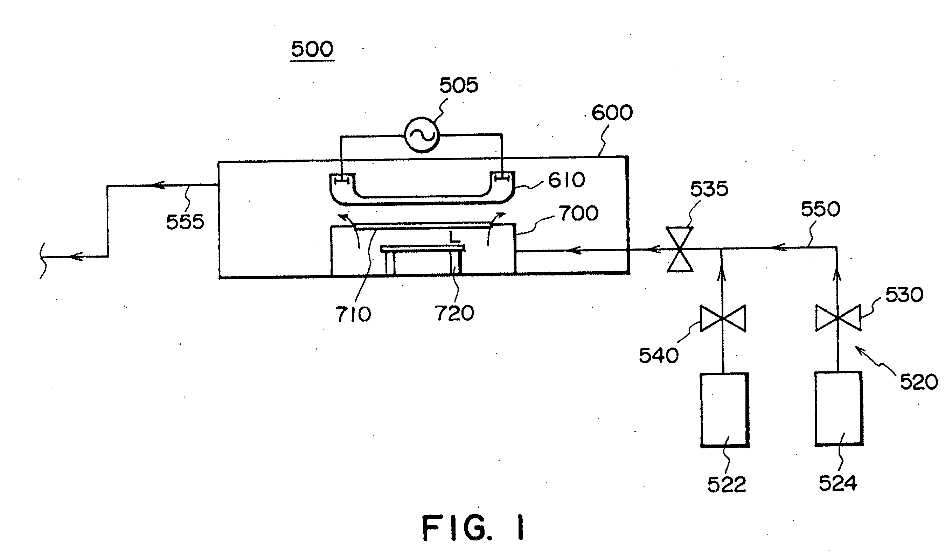

Figure 1 is a schematic and sectional view of a rinsing system 500 of the present invention. The rinsing system 500 comprises a first container 600, an ultraviolet lamp 610, a second container 700, and a gas introducing mechanism 520.

The first container 600 defines a closed ambience, and it is made of stainless steel or aluminum, having good gas tightness. The first container 600 accommodates therein the ultraviolet lamp 610 and the second container 700.

The ultraviolet lamp 610 comprises, for example, a low-pressure Hg lamp adapted to produce ultraviolet rays of a wavelength 184.9 nm or a wavelength 253.7 nm. The ultraviolet light has an energy stronger than visible light and, when used in combination with oxygen, it produces an optical rinsing function to be described later. The ultraviolet rays of a wavelength of 184.9 nm are effective to produce activated oxygen, in an oxygen gas. The activated oxygen functions to activate organic substances adhered to an optical element L. Also, ultraviolet rays of a wavelength 253.7 nm are effective to produce, from ozone, activated oxygen being in exited state. The activated oxygen in excited state functions to decompose and volatilize the activated organic substances.

The ultraviolet lamp 610 may comprise a laser emission unit having a continuous wave laser or a pulse laser, such as Xe2, ArF or KrF excimer laser light source or excimer lamp, F2 laser, or harmonic laser, for example, as well as an optical system for regulating the light quantity and the beam shape (that is, for example, a beam shaping optical system for shaping the laser light and a light quantity adjusting optical system such as a zoom lens). Where a laser is used, if necessary, a laser trap may be provided below a supporting table 720 to be described later.

The ultraviolet lamp 610 is provided above the first container 600. Also, the ultraviolet lamp 610 is electrically connected to a voltage source 505. If necessary, the lighting and extinction of the ultraviolet lamp 610 may be controlled by controlling turning-on and turning-off of the voltage source 505. With this arrangement, the ultraviolet lamp 610 may be extinguished in a period having no relevance to the rinsing operation, such that the lifetime of the lamp can be prolonged.

The second container 700 is disposed inside the first container 600, and it produces a separate ambience. The second container 700 defines a rinsing space for accommodating an optical element L (article to be cleaned), to rinse the same. The optical element L may include a lens, a prism or a mirror, for example. Preferably, any particles thereon may be removed beforehand by use of an organic solvent such as alcohol or acetone, for example. Lens materials usable in an exposure apparatus to be used with excimer lasers are synthetic quartz glass and calcium fluoride (fluorite).

Generally, after the rinsing operation therefor is completed, the optical element L is combined with a metal holding tool (not shown) into an integral structure and, thereafter, it is incorporated into the exposure apparatus 1. If, however, the holding tool and the optical element L are rinsed separately, the rinsing efficiency is low. Also, there is a possibility that, during the procedure in which the optical element L is combined with the holding tool, contaminants are adhered to the optical element L. In consideration of it, if necessary, the optical element L and the holding tool may be rinsed integrally.

The second container 700 is arranged to maintain an ambience different from that of the first container 600. The second container 700 is made of glass, stainless steel, or aluminum, for example, using no organic series material. As a result of it, even being irradiated with ultraviolet light from the lamp 610, no contaminant is produced in the inside ambience. Also, even if contaminants are produced inside the first container 600 as a result of irradiation with ultraviolet rays, since the second container 700 is able to maintain an ambience separate from the first container 600, contamination of the inside ambience of the second container can be prevented. More specifically, a gas (e.g., oxygen and nitrogen) is supplied into the second container 700 by means of a supply pipe 550 to be described later, to create a relation "inside pressure of the second container 700" > "inside pressure of the first container 600". Thus, any contaminants inside the first container 600 do not enter the second container 700.

The second container 700 has a window 710 made of synthetic quartz glass or fluorite, for transmitting ultraviolet light. The window 710 is provided at the top of the second container 700 so as to allow that the ultraviolet light from the lamp 610 is projected on the optical element L. Where an excimer laser is used as the light source 610, the window 710 may selectively be provided, upon its opposite faces, with anti-reflection films for excimer laser.

The second container 700 further accommodates therein a supporting table (holder) 720 for supporting an article to be rinsed. The supporting table 720 is formed with an opening, for example, having a diameter smaller than the article to be rinsed, such that the optical element L can be supported at the peripheral portion of the opening. The supporting table has a predetermined height. With this structure, the top and bottom faces of the optical element L can be rinsed effectively by the rinsing system 500.

As the ultraviolet light is projected on the surface of the optical element L, it causes a photo-chemical reaction by which organic substances adhered to the optical element L are decomposed, such that the element is rinsed. At the portion where the optical element L and the supporting table 720 are in contact with each other, the ultraviolet light does not impinge there directly. However, since activated oxygen in excited state turns around there, a rinsing effect to some extent can be expected.

A gas introducing mechanism 520 comprises an oxygen reservoir 522, a nitrogen reservoir 524, and opening and closing valves (valves) 530, 535 and 540, as well as a gas supply pipe 550 made of stainless steel, for example. The gas introducing mechanism 520 is connected to the gas supplying pipe 550, and it is connected to the second container 700 through a gas supplying nozzle (not shown) made from a quartz pipe. The gas introducing mechanism 520 further comprises a mass flow controller (not shown) for controlling the flow rate of oxygen and nitrogen, and a filter for removing particles and organic substances contained in the oxygen and nitrogen to be introduced. Alternatively, the gas introducing mechanism 520 may supply an air to the second container 700, in place of oxygen and nitrogen.

The oxygen has a Herzberg absorption band at 190 nm and 240 nm, respectively, such that, it produces ozone and oxygen radical as it reacts with ultraviolet rays. The ozone and oxygen radical are effective to cause oxidation decomposition of contaminants such as organic matters, that is, to accelerate the rinsing. The gas introducing mechanism 520 may introduce ozone, in place of oxygen.

The nitrogen reservoir 524 supplies clean nitrogen into the second container 700. The nitrogen can be attracted to non-bond hands on the surface of the optical element L having being rinsed, by which re-contamination of the optical element L can be avoided. For example, the nitrogen may be introduced at a room temperature and a low humidity.

The valve 530 is provided at an arbitrary position on the supply pipe 550, and it functions to open and close the gas supply to the second container 700 from the nitrogen reservoir 524. Also, the valve 540 is provided at an arbitrary position on the supply pipe 550, and it functions to open and close the gas supply to the second container 700 from the oxygen reservoir 522. The valve 535 is provided at an arbitrary position on the supply pipe 550, and it functions to open and close the gas supply to the second container 700 from the nitrogen reservoir 524 and the oxygen reservoir 522, in common.

Connected to the first container 600 is a gas exhausting mechanism having a gas exhaust pipe 555 made of stainless steel, for example. The gas exhausting mechanism includes an ozone decomposing filter (not shown) connected to the exhaust pipe 555. The ozone decomposing filter functions to decompose the ozone discharged outwardly through the gas exhaust pipe 555.

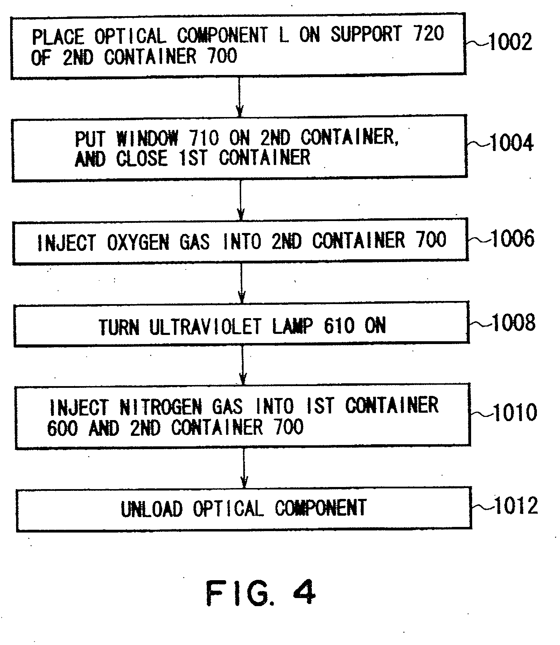

Now, referring to Figure 4, the rinsing method using the rinsing system 500 will be described in greater detail. Figure 4 is a flow chart for explaining a rinsing method using the rinsing system of Figure 1.

First, an optical element L whose surface has been wiped out with an organic solvent such as alcohol or acetone is placed on the article supporting table 710 (Step 1002). The window 710 is then put on the second container 700 and, thereafter, the first container 600 is closed (Step 1004).

Subsequently, the valves 535 and 540 are closed, and the flow-rate controlled oxygen is supplied into the second container 700 through the supply pipe 550 (Step 1006). By this, the ambient gas originally present inside the second container 700 is discharged into the container 600 through the clearance and, further, it is discharged through the first container 600 and the exhaust pipe 555. Subsequently, at the same time as or slightly after Step 1006, the ultraviolet lamp 610 is turned on (Step 1008). The ultraviolet rays emitted from the lamp 610 pass through the window 710 of the second container 700, such that the optical rinsing operation for the optical element L is performed. With the ultraviolet light, oxygen changes into ozone.

Even if degasification of organic matters is produced inside the first container due to irradiation with ultraviolet rays, since the second container 700 holds an ambience separate from the first container, the optical element L is not contaminated by the produced organic substance gas. Further, in the rinsing method of this embodiment, since the optical element L is placed in the second container 700 in which no organic series material is used at all, production of organic substance gas inside the second container 700 can be prevented effectively.

As a sufficient quantity of ultraviolet rays are projected to the optical element L and, at step S1008, when a predetermined time (e.g. ten minutes) is elapsed, the valve 540 is closed to stop the oxygen supply. Simultaneously, the valve 530 is opened, and a nitrogen gas is supplied into the first container 600 and the second container 700 (Step 1010). In response to the nitrogen gas supply, ozone and activated oxygen are discharged outwardly through the exhaust pipe 555. By this, a nitrogen containing ambience is produced in each of the first and second containers 600 and 700. It should be noted that the nitrogen supplied here is clean nitrogen whose particles and organic substances have been removed.

As a predetermined time elapses from Step 1010, the valves 530 and 535 are closed to stop the nitrogen supply, and the ultraviolet lamp 610 is extinguished. Here, the first and second containers 600 and 700 are held under a nitrogen ambience, and the optical element L is left in the nitrogen gas ambience for a while. By leaving the optical element L in the nitrogen gas, species having bonding potential (non-bond hands) on the surface of the optical element L attract nitrogen and they are reduced. As a result, the surface of the optical element L is deactivated, such that the contaminant attracting probability thereof is decreased. After this, as a predetermined time is elapsed, the optical element L is unloaded from the rinsing system 500 (Step 1012).

Specific examples of the present invention will be described below.

### [Example 1]

In Example 1, as regards an article (optical element) to be rinsed, a planar quartz substrate of a thickness 1 mm having its surface polished and having particles thereon removed by use of an organic solvent, was rinsed by means of the rinsing system 500. For comparison therewith, a rinsing experiment was carried out to a similar quartz substrate, by use of the rinsing system 500 in which the quartz window glass 710 was demounted and the ultraviolet lamp 610 and the article to be rinsed were placed in the same ambience.

Here, the quartz substrate rinsed by use of the rinsing system 550 in Example 1 is referred to as "substrate A". Also, the quartz substrate rinsed by using the rinsing system 550 with the quartz window glass 710 demounted so that the ultraviolet lamp 610 and the article to be rinsed were placed in the same ambience, is referred to as "substrate B". Spectral measurements were made to the substrates A and B with respect to a wavelength 193 nm. The results are that the transmission factor of the substrate A was 90.71%, and the reflection factor thereof was 9.20%. Also, the transmission factor of the substrate B was 90.53%, and the reflection factor thereof was 9.18%. Taking the internal loss into account, the theoretical transmission factor of a planar quartz substrate having a thickness 1 mm is 90.75%, and on the other hand the reflection factor is 9.20%. Comparing this with the experimental results for the substrates A and B, it has been confirmed that the substrate A showed a value close to the idealistic transmission factor.

### [Example 2]

In Example 2, a quartz substrate having been rinsed in accordance with Example 1 was coated with an anti-reflection film, and then the resultant was rinsed by using the rising system 500. The anti-reflection film was an anti-reflection film effective to a wavelength near 195 nm. Also, for comparison, a rinsing experiment was carried out to a similar quartz substrate, with the quartz window glass 710 of the rinsing system 500 being demounted so that the ultraviolet lamp 610 and the article to be rinsed were placed in the same ambience.

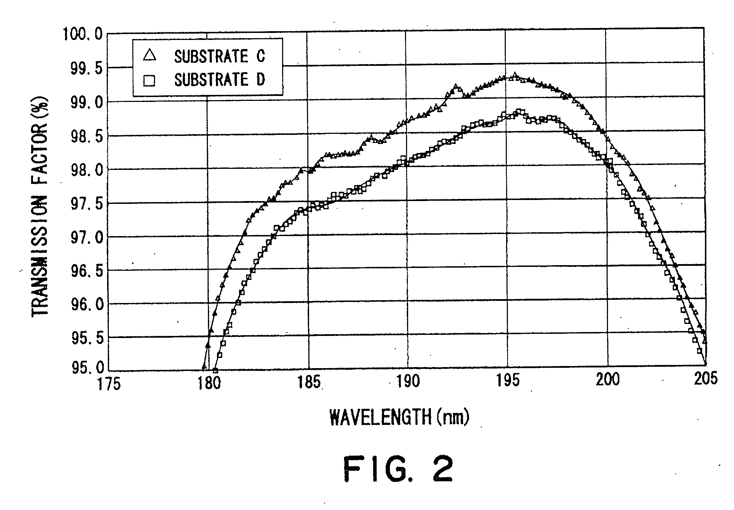

The quartz substrate rinsed by the rinsing system 500 in Example 2 is referred to as a substrate C. Also, the quartz substrate rinsed by the rinsing system with the quartz window glass being demounted so that the lamp 610 and the article were placed in the same ambience, is referred to as a substrate D. Spectral measurements were carried out to the substrates C and D, with respect to a wavelength 193 nm. Figure 2 shows transmission factors of the substrates C and D after the rinsing. Here, Figure 2 illustrates the transmission factor of the optical element L after the rinsing. The substrate C showed a higher transmission factor than the substrate D. Also, there is a difference in transmission factor of about 0.4% between the substrates C and D, coated with an anti-reflection film. It will be understood that this value is about twice of the difference (0.2%) in transmission factor between the substrates A and B (without coating).

As described above, with the rinsing system of this embodiment in which an article is rinsed in an ambience separate from the ultraviolet lamp 610, a good optical element can be obtained. Also, where the substrate surface is coated with an anti-reflection film, a better optical element L is obtainable.

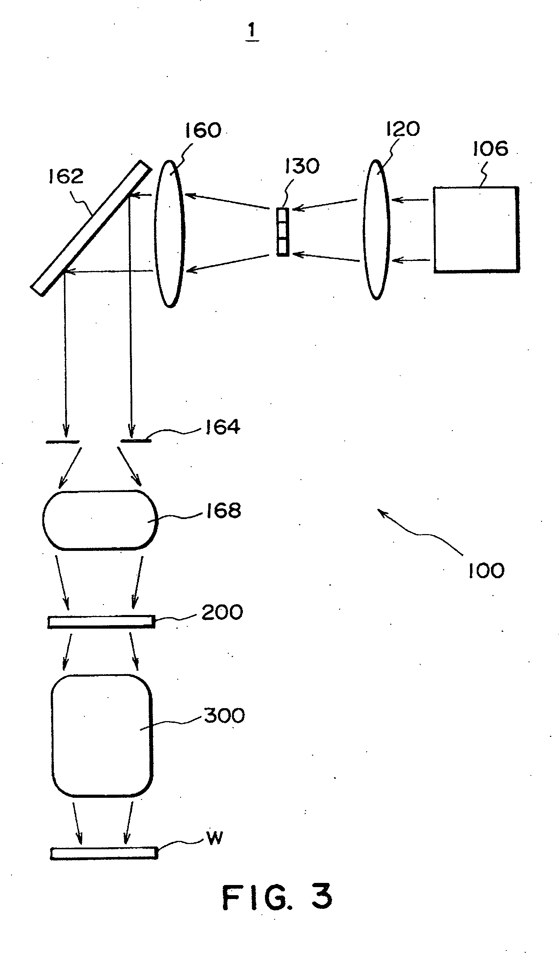

Next, an embodiment of an exposure apparatus according to the present invention will be described. Here, an optical element including a lens and/or a mirror, and to be incorporated into such exposure apparatus, is cleaned beforehand by means of the rinsing system 500 described above. Also, a lens or lenses of the optical element have their surfaces coated with an anti-reflection film. Figure 3 shows a simplified optical path of the exposure apparatus 1 having an illumination system 100.

As shown in Figure 3, the exposure apparatus 1 comprises an illumination system 100, a mask 200, and a projection optical system 300. The exposure apparatus 1 is a projection exposure apparatus arranged so that a device pattern formed on the mask 200 is lithographically printed on a wafer W. In semiconductor device manufacturing processes, a wafer having been exposed with such device pattern is developed, and an etching process is made thereto.

The illumination system 100 functions to illuminate a mask 110 having a transfer pattern formed thereon. A lamp unit 106 is a system which includes a light emitting tube for producing illumination light, an elliptical mirror and a lens, for example. It cooperates with a lens system 120 to illuminate a fly's eye lens 130. Light from the fly's eye lens 130 goes via a lens system 160, a deflecting mirror 162, a field stop 164, and a lens system 168, and it illuminates the mask 200.

As regards the lamp, generally, an ultra-high pressure Hg lamp having an output of 500W or more, or a xenon lamp, for example, may be used. The light source is not limited to lamps. It may use a laser such as F2 excimer laser of a wavelength of about 157 nm, ArF excimer laser of a wavelength of about 193 nm, KrF excimer laser of a wavelength of about 248 nm, for example. When a laser is used, preferably, a beam shaping optical system for shaping parallel light from the laser light source into a desired shape, as well as an incoherency transforming optical system for transforming coherent laser light into incoherent light, may be used.

The rinsing system 500 has a function for rinsing the optical element L at good quality. Therefore, a desired optical performance is attainable with the exposure apparatus 1 which uses the optical element L. It should be noted here that, except for use of the optical element L having been rinsed through the rinsing system 500, the exposure apparatus of this embodiment can use any technology known in the art, such that it is not limited to the form disclosed here.

The rinsing method and apparatus described hereinbefore are arranged so that an article to be cleaned is rinsed at a good quality, inside a second container having a clean ambience as compared with that of the first container. Further, an optical system having an optical element rinsed in accordance with the rinsing method and apparatus described above, has a good optical characteristic, such that the exposure apparatus into which the optical element is incorporated can perform good-quality exposure process.

While the invention has been described with reference to the structures disclosed herein, it is not confined to the details set forth and this application is intended to cover such modifications or changes as may come within the purposes of the improvements or the scope of the following claims.

## Claims

1. An optical element **characterized by** being disposed in a container having an inside ambience independent from an outside of the container, and by rinsed by irradiation with ultraviolet rays from a light source outside the container.

2. An optical element according to Claim 1, wherein the container has no seal member containing an organic substance.

3. An optical element according to Claim 1 or 2, wherein irradiation of the ultraviolet rays is carried out while the container is filled with a gas containing oxygen.

4. An optical element according to Claim 3, wherein irradiation of the ultraviolet rays is carried out while a casing accommodating the light source and the container is filled with an inactive gas such as nitrogen.

5. An optical element according to any one of Claims 1 - 3, wherein said optical element is made of at least one of fluorite and quartz being usable in a wavelength region of 200 nm or less.

6. An optical element according to any one of Claims 1 - 5, wherein the ultraviolet rays contain light of a wavelength of 300 nm or less.

7. An optical element according to Claim 6, wherein the ultraviolet light is emitted from a low-pressure Hg lamp.

8. An optical system **characterized by** including at least one optical element as recited in Claim 7.

9. An exposure apparatus **characterized by** including an optical system as recited in Claim 8.

10. A rinsing system, **characterized by**:
a first container;
a light emitting unit disposed inside said first container, for emitting ultraviolet rays; and
a second container disposed inside said first container and arranged so that said light emitting unit is outside said second container, said second container being adapted to accommodate therein an article to be rinsed and also to enable irradiation of the article with ultraviolet rays from said light emitting unit, said second container further being adapted to maintain an ambience different from that of said first container.

11. A rinsing system according to Claim 10, wherein the article is a light transmission type optical element.

12. A rinsing system according to Claim 10, wherein the article is made of one of quartz and fluorite and wherein the article is an optical element adapted to be used in a wavelength region of 200 nm or shorter.

13. A container for a rinsing system, **characterized by**:
a casing for accommodating therein an article to be rinsed, said casing being adapted to maintain an ambience different from an outside ambience; and
a glass window mounted on said casing, for enabling irradiation of the article with ultraviolet rays from the outside.

14. A container according to Claim 13, wherein the article is a light transmission type optical element.

15. A container according to Claim 13, wherein the article is made of one of quartz and fluorite and wherein the article is an optical element adapted to be used in a wavelength region of 200 nm or less.

16. A rinsing method, **characterized by**:
a first step for accommodating an article, to be rinsed, into a second container disposed inside a first container and being adapted to maintain an ambience different from that of the first container;
a second step for introducing a rinsing gas into the second container; and
a third step for irradiating the article with ultraviolet rays from a light source disposed inside the first container but outside the second container.

17. An exposure apparatus having an optical element rinsed in accordance with a rinsing method as recited in Claim 16.

18. An apparatus according to Claim 17, wherein the optical element is adapted to be used in a wavelength region of 200 nm or less.

19. A device manufacturing method, **characterized by**:
a first step for exposing a photosensitive member with a device pattern by use of an exposure apparatus as recited in Claim 17 or 18; and
a second step for developing the exposed photosensitive member.

20. A method of producing an optical element, **characterized by**:
a first step for preparing an optical element; and
a second step for cleaning the prepared optical element in accordance with a rinsing method as recited in Claim 16.

21. A rinsing method as claimed in claim 16 further comprising process features from any one or any combination of claims 1 to 8.
